# EUROPÄISCHE PATENTSCHRIFT

(11) **EP 3 104 070 B1**
(45) Veröffentlichungstag und Bekanntmachung des Hinweises auf die Patenterteilung: **18.04.2018**
(21) Anmeldenummer: 16171733.5
(22) Anmeldetag: 27.05.2016
(51) Int. Cl.: F21V 3/04, F21V 5/00, F21K 9/27, F21Y 115/10, F21Y 103/10, G02B 5/02, F21V 8/00

(54) **BELEUCHTUNGSVORRICHTUNG MIT LEDS**
ILLUMINATION DEVICE HAVING LEDS
DISPOSITIF D'ECLAIRAGE COMPRENANT DES LED

(30) Priorität: 09.06.2015 DE 102015210508
(43) Veröffentlichungstag der Anmeldung: 14.12.2016
(73) Patentinhaber: OSRAM GmbH, 80807 München (DE)
(72) Erfinder: Loster, Matthias, 93047 Regensburg (DE); Schwalenberg, Simon, 93179 Brennberg (DE); Wiesmann, Christopher, 93092 Barbing (DE)

(56) Entgegenhaltungen:
- WO-A2-2013/057660
- US-A1- 2003 002 153
- US-A1- 2006 056 166
- US-A1- 2012 155 072
- US-B1- 7 784 954

## Beschreibung

### Technisches Gebiet

Die vorliegende Erfindung betrifft eine Beleuchtungsvorrichtung mit einer Mehrzahl LEDs zur Emission von Licht und einem flächigen Transmissionsfenster.

### Stand der Technik

Die Vorteile, die LED-basierte Lichtquellen im Vergleich zu konventionellen Leuchtmitteln wie bspw. Glüh- oder auch Leuchtstofflampen die Energieeffizienz betreffend haben, sind bekannt. Eine Herausforderung kann bspw. dahingehend bestehen, das von den LEDs gerichtet, typischerweise mit einer Lambertschen Abstrahlcharakteristik, abgegebene Licht auf eine gewünschte Lichtverteilung anzupassen. Bei den in Rede stehenden Beleuchtungsvorrichtungen durchsetzt das von den LEDs emittierte Licht ein Transmissionsfenster, wobei es sich bspw. um den Hüllkolben eines als Ersatz für eine Leuchtstofflampe vorgesehenen Leuchtmittels handeln kann. Dabei kann nicht nur die Lichtverteilung im Fernfeld, sondern auch die von den LEDs auf dem Transmissionsfenster erzeugte Beleuchtungsstärkeverteilung als Nahfeld zu berücksichtigen sein. Dies soll ein mögliches Anwendungsgebiet illustrieren.

Aus der WO 2013/057660 A2 ist ein Leuchtstofflampen-Retrofit mit einer anisotrop streuenden Streulage bekannt. Diese kann zur Streuung entlang der Längsachse der Röhre oder zur Streuung in dazu senkrechten Schnittebenen vorgesehen sein. Ferner können zwei um 90° zueinander verdrehte Streulageri für eine kombinierte Streuung entlang der Längsachse und senkrecht dazu vorgesehen sein.

Aus der US 7,784,954 B1 ist ein LCD-Backlight bekannt, bei dem das von unterschiedlichen Lichtquellen emittierte Licht für eine gleichmäßige, flächige Verteilung durch mehrere Streulagen mit anisotropen Streueigenschafen geführt wird.

Auch die US 2006/0056166 A1 betrifft ein LCD-Backlight mit anisotrop streuenden Lagen, die Anisotropie wird mit anisotropen Partikeln erreicht. Gleiches gilt für die US 2003/0002153 A1.

Aus der US 2012/0155072 A1 ist ein Leuchtstofflampen-Retrofit mit LEDs bekannt, wobei die Hüllkolbenwand derart geformt ist, dass ein Teil des Lambertsch emittierten Lichts durch Totalreflexion oder durch Streuung an Mesostrukturen umverteilt wird.

### Darstellung der Erfindung

Der vorliegenden Erfindung liegt das technische Problem zugrunde, eine besonders vorteilhafte Beleuchtungsvorrichtung mit LEDs und einem Transmissionsfenster anzugeben.

Erfindungsgemäß löst diese Aufgabe eine Beleuchtungsvorrichtung gemäß Anspruch 1

Bevorzugte Ausführungsformen finden sich in den abhängigen Ansprüchen und der gesamten Offenbarung, wobei in der Darstellung nicht immer im Einzelnen zwischen Vorrichtungs- und Verfahrens- bzw. Verwendungsaspekten unter schieden wird; jedenfalls implizit ist die Offenbarung hinsichtlich sämtlicher Anspruchskategorien zu lesen.

Mit den in das Transmissionsfenstermaterial eingebetteten Lichtablenkungspartikeln wird eine von den LEDs eintrittsseitig auf dem Transmissionsfenster erzeugte Beleuchtungsstärkeverteilung, die aufgrund der Anordnung der LEDs nebeneinander mit typischerweise einem gewissen Abstand zueinander schwankt, zumindest etwas homogenisiert. Dabei sind die Lichtablenkungspartikel (der Einfachheit halber auch nur "Partikel") in ihren Ablenkungseigenschaften anisotrop und derart ausgerichtet, dass sich die jeweilige Ablenkungsachse entlang der Beleuchtungsvorrichtungs-Längsachse erstreckt. In der Konsequenz wird das Licht beim Durchsetzen des Transmissionsfensters in Bezug auf die Beleuchtungsvorrichtungs-Längsachse, also in diese beinhaltenden Schnittebenen betrachtet, stärker aufgefächert als in zu der Längsachse senkrechten Schnittebenen.

Etwa im Falle des Leuchtstofflampen-Ersatzes kann durch die Streuung eine Beleuchtungsstärkeverteilung austrittsseitig des Hüllkolbens (also des Transmissionsfensters) weitgehend homogenisiert sein, sodass von außen auf den Hüllkolben blickend bspw. trotz der beabstandet zueinander angeordneten LEDs ein gleichmäßig leuchtendes Band erscheint. Das Vorsehen anisotroper Partikel und deren ausgerichtete Anordnung kann hierbei insoweit vorteilhaft sein, als das Maß an Auffächerung zumindest etwas an die erforderliche Homogenisierung angepasst sein kann. Im eben genannten Beispiel ist nämlich bspw. in Bezug auf die Umlaufrichtung (um die Hüllkolben-Längsachse) weniger Homogenisierung erforderlich, kann also eine Minimierung der partikelbedingten Lichtablenkung in Bezug auf diese Richtung die Effizienz der Beleuchtungsvorrichtung verbessern helfen. Die Auffächerung des Lichts durch die Partikel ist meist auch mit einem gewissen Verlust behaftet, weil dabei ein Teil des Lichts zurückreflektiert und im Inneren der Beleuchtungsvorrichtung absorbiert werden kann.

Vorteilhafterweise kann in Bezug auf die Umlaufrichtung um die Beleuchtungsvorrichtungs-Längsachse eine Lichtformung durch geometrische Strahlenoptik möglich bleiben, kann insoweit also eine Linsenfunktion und/oder ein Mischmittel basierend auf geometrischer Strahlenoptik implementiert werden (siehe unten im Detail). Eine solche Kombination kann bspw. aus Effizienzgründen vorteilhaft sein bzw. lässt sich so auch gut eine Einstellung sowohl im Nah- als auch im Fernfeld erreichen.

Das Licht wird auf der Ablenkungsachse stärker "aufgefächert" als auf der Passierachse. Fällt bspw. ein Strahlenbündel mit einer als nach der Lichtstärke gewichtet gebildeten Hauptrichtung ein (bevorzugt senkrecht zu den beiden Achsen), so wird es in einer die Hauptrichtung und die Ablenkachse beinhaltenden Schnittebene ("Ablenkebene") betrachtet stärker aufgeweitet als in einer dazu senkrechten, die Passierachse und die Hauptrichtung beinhaltenden Schnittebene ("Passierebene").

Die Aufweitung in der Ablenkebene kann zu jener in der Passierebene bspw. in einem Verhältnis von mindestens 5:4, 4:3, 3:2, 2:1, 3:1, 4:1 bzw. 5:1 stehen (in der Reihenfolge der Nennung zunehmend bevorzugt); davon unabhängig können mögliche Obergrenzen bspw. bei höchstens 100:1, 80:1 bzw. 60:1 liegen. "Aufweitung" meint dabei jeweils die Differenz der Öffnungswinkel in der jeweiligen Ebene dem Transmissionsfenster vor- und nachgelagert; für die Ermittlung des Öffnungswinkels wird dabei jeweils die Halbwertsbreite zugrunde gelegt.

Mit den Partikeln soll in Bezug auf die "Längsachse" der Beleuchtungsvorrichtung aufgefächert werden, auf der die Beleuchtungsvorrichtung bevorzugt auch ihre längste Erstreckung hat. Das vorliegende Konzept kann aber bspw. auch im Falle einer Flächenleuchte mit einer Mehrzahl Reihen an LEDs, die je Reihe nebeneinander angeordnet sind, von Interesse sein. Aus jeder Reihe kann durch die Homogenisierung ein Leuchtband werden, wobei die Leuchtbänder noch unterscheidbar nebeneinander angeordnet sind. Dies kann Gestaltungsmöglichkeiten eröffnen. Im Allgemeinen kann die Längsachse auch nach Art einer Ausgleichsgeraden durch die "nebeneinander" angeordneten LEDs gelegt sein (können diese also auf einer Zick-Zack-Strecke links und rechts der Längsachse verteilt angeordnet sein); bevorzugt durchsetzt die Längsachse die nebeneinander angeordneten LEDs, besonders bevorzugt jeweils im Volumenschwerpunkt.

"Mehrzahl" ist Rahmen dieser Offenbarung auf mindestens 2, in dieser Reihenfolge zunehmend bevorzugt mindestens 5, 10, 15 bzw. 20, zu lesen; mögliche Obergrenzen können davon unabhängig bspw. bei höchstens 200, 150 bzw. 100 liegen. Die Ausrichtung der Partikel "mehrheitlich" meint, dass bspw. mindestens 60 %, 70 % bzw. 80 % aller eingebetteten, anisotropen Partikel entsprechend ausgerichtet sind (in der Reihenfolge der Nennung zunehmend bevorzugt); da die Ausrichtung teils auch statistischen Vorgängen unterliegen kann, können Obergrenzen bspw. bei 95 % bzw. 90 % liegen. Wenngleich im Allgemeinen zusätzlich zu den anisotropen Partikeln auch isotrope Lichtablenkungspartikel in das Transmissionsfenstermaterial eingebettet sein können, sind es bevorzugt ausschließlich die anisotropen Partikel.

Die Ausrichtung der Partikel derart, dass sich die jeweilige Ablenkachse "entlang der Längsachse" erstreckt meint, dass eine zu dieser Ablenkachse parallele Richtung mit einer zur Längsachse parallelen Längsrichtung einen Winkel von dem Betrag nach höchstens 60°, in dieser Reihenfolge zunehmend bevorzugt höchstens 50°, 40° bzw. 30°, einschließen soll. Dabei werden jene Richtungen betrachtet, die den kleinsten Winkel miteinander einschließen. Wenngleich eine parallele Anordnung bevorzugt ist, kann es technisch bedingt eine gewisse Verteilung um den 0°-Winkel geben.

Bei den Lichtablenkungspartikeln handelt es sich bevorzugt um Inertablenker, die das Licht also ohne Änderung dessen spektraler Eigenschaften (spektraländerungsfrei) ablenken. Die Lichtablenkungspartikel können bspw. aus Aluminiumnitrit, hexagonalem Bornitrit, Magnesiumsilikathydrat, Siliziumdioxid, Aluminiumoxid (Al₂O₃), Titandioxid oder Siliziumnitrid vorgesehen sein. Je nach Größe der Partikel (siehe unten im Detail) kann die Lichtablenkung bspw. vorrangig durch Brechung (größere Partikel, makroskopische Betrachtung) oder durch Streuung (kleinere Partikel, mikroskopische Betrachtung) erfolgen, wobei in der Regel beide Effekte beitragen.

Das Transmissionsfenstermaterial ist bevorzugt ein Kunststoffmaterial auf organischer Basis, besonders bevorzugt Polymethylmethacrylat (PMMA) oder Polycarbonat (PC). Die Partikel müssen nicht zwingend anorganisch sein, es können auch organische anisotrope Partikel eingebettet sein. Generell bezieht sich die Angabe "transparent transmissiv" auf das Transmissionsfenstermaterial an sich, also auf dieses von den eingebetteten Partikeln abgesehen; ein theoretisch partikelfreies Transmissionsfenstermaterial würde das Licht im Volumen richtungsänderungsfrei durchsetzen.

Bei einer bevorzugten Ausführungsform sind die Partikel aus einem für das LED-Licht transmissiven Partikelmaterial vorgesehen. Dieses hat bevorzugt einen Brechungsindex n_{Partikel}, der sich von dem Brechungsindex des Transmissionsfenstermaterials (n_{Transmissionsfenster}) um dem Betrag nach mindestens 0,02, in der Reihenfolge der Nennung zunehmend bevorzugt mindestens 0,03, 0,04, 0,05, 0,06, 0,07, 0,08 bzw. 0,09, unterscheidet; davon unabhängig liegen mögliche Obergrenzen der betragsmäßigen Differenz bspw. bei in der Reihenfolge der Nennung zunehmend bevorzugt höchstens 0,5, 0,4, 0,3, 0,2 bzw. 0,15. Betrachtet wird jeweils der Brechungsindex bei der Natrium-D-Linie, also bei einer Wellenlänge von 589 nm. Bevorzugt ist n_{Partikel} > n_{Transmissi-onsfenster}.

Im Allgemeinen sind auch anisotrope Partikel aus einem nicht transmissiven Material denkbar, etwa reflektive Partikel, wenn diese hinreichend klein sind. Erfolgt die Lichtablenkung nämlich vorrangig durch Beugung/Interferenz, kann ein vorwärts gestreuter Teil des Lichts gleichwohl größer sein als ein zurückgestreuter Teil. Bevorzugt sind transmissive Partikel, auch aus Effizienzgründen.

Bei einer bevorzugten Ausführungsform haben die Partikel jeweils eine längliche Form, wobei je Partikel ein Verhältnis von parallel zu der Passierachse genommener Erstreckung zu parallel zu der Ablenkungsachse genommener Erstreckung bei mindestens 4:3, vorzugsweise mindestens 3:2, weiter bevorzugt mindestens 2:1, besonders bevorzugt mindestens 3:1, liegt. Davon unabhängig können mögliche Obergrenzen dieses Verhältnisses bspw. bei höchstens 20:1, 15:1, 10:1 bzw. 5:1 liegen. Je Partikel fällt die Passier- mit der Längsachse (längste Erstreckung) und die Streuachse mit einer dazu senkrechten Querachse (kürzeste Erstreckung) zusammen.

In gewisser Näherung können die länglichen Partikel zylinderförmigen Stäben entsprechen und lässt sich ihre optisch anisotrope Wirkung anhand einer Zylinderlinse verdeutlichen. Die Zylinderachse fällt mit der Passierachse zusammen; Lichtstrahlen, die in die Zylinderachse/Passierachse beinhaltenden Ebenen einfallen, werden von einem möglichen Versatz abgesehen nicht abgelenkt.

Demgegenüber "sehen" in dazu senkrechten Ebenen einfallende Lichtstrahlen die Kreisform der Zylinderlinse und werden sie in Abhängigkeit von ihrem jeweiligen Abstand zur Zylinderachse unterschiedlich stark abgelenkt. Dies ist ein Modell zur Illustration, das mit Brechungseffekten argumentiert. Bei kleinen Partikeln können Beugungs- und Interferenzeffekte dominant werden, haben die Erfinder jedoch in entsprechenden Simulationen dieselbe Abhängigkeit (Passierachse = Längsachse / Ablenkungsachse = Querachse) beobachtet.

Bei einer bevorzugten Ausführungsform haben die Partikel jeweils eine parallel zu ihrer Passierachse genommene Erstreckung von mindestens 1 µm, in dieser Reihenfolge zunehmend bevorzugt mindestens 3 µm, 5 µm, 7 µm bzw. 10 µm. Mögliche Obergrenzen liegen bei höchstens 200 µm, 150 µm, 100 µm, 80 µm, 70 µm bzw. 60 µm (in der Reihenfolge der Nennung zunehmend bevorzugt), wobei das Vorsehen einer Obergrenze ausdrücklich auch unabhängig von einer Untergrenze von Interesse sein kann, und umgekehrt. Parallel zur Ablenkungsachse kann die Erstreckung bspw. in dieser Reihenfolge zunehmend bevorzugt mindestens 0,2 µm, 0,5 µm, 1 µm, 1,5 µm bzw. 2 µm betragen; mögliche Obergrenzen liegen (davon unabhängig) bspw. bei in dieser Reihenfolge zunehmend bevorzugt höchstens 30 µm, 25 µm, 20 µm, 15 µm bzw. 10 µm.

In bevorzugter Ausgestaltung ist das Transmissionsfenster ein Extrusionsteil oder ein Spritzgussteil. Generell (auch von der Herstellung im Einzelnen unabhängig) kann ein in Bezug auf die zur Beleuchtungsvorrichtungs-Längsachse parallele Längsrichtung translationssymmetrisch aufgebautes Transmissionsfenster bevorzugt sein. Bei der Herstellung durch Extrusion oder Spritzguss kann die Orientierung der Partikel bereits beim Extrudieren oder Spritzgießen erfolgen, weil sich längliche Partikel bspw. mit ihrer Längsachse entlang der Einspritzrichtung orientieren. Bei der Extrusion müssen die Partikel mit ihrer jeweiligen Längsachse nicht zwingend parallel zu der Extrusionsrichtung orientiert sein, sondern kann durch gezielte Verwirbelungen auch eine Orientierung (im Wesentlichen) senkrecht dazu erreicht werden.

Im Allgemeinen kann das Transmissionsfenster auch eine plane Platte sein, können die zur Dickenrichtung senkrechten Flächenrichtungen also in einer Ebene liegen. Ein solches Transmissionsfenster kann bspw. als Abdeckung einer Flächenleuchte vorgesehen sein.

Erfindungsgemäß ist das Transmissionsfenster in Form eines länglichen Hüllkolbens ausgebildet, der sich in zur Beleuchtungsvorrichtungs-Längsachse senkrechten Schnittebenen betrachtet gekrümmt und somit zumindest ein Stück weit umlaufend erstreckt (bezogen auf einen Umlauf um die Beleuchtungsvorrichtungs-Längsachse). Wenngleich dies im Allgemeinen auch im Falle einer direkt in eine Leuchte integrierten Beleuchtungsvorrichtung von Interesse sein kann, findet der längliche Hüllkolben bevorzugt bei einem als Leuchtstofflampen-Ersatz ausgelegten Leuchtmittel Verwendung. Der Hüllkolben muss sich dabei nicht vollständig umlaufend erstrecken, erstreckt sich aber vorzugsweise über mindestens 180°, weiter bevorzugt mindestens 220°, besonders bevorzugt mindestens 260° (jeweils um die Längsachse).

Erfindungsgemäß ist das Transmissionsfenster mit einer über seine Fläche variierenden Dicke gefasst. Diese variierende Dicke kann bspw. durch eine dem Transmissionsfenster "global" überlagerte Linsenstruktur oder durch eine periodische Mesostruktur bedingt sein, siehe unten im Detail. Wie anhand des gekrümmten Hüllkolbens veranschaulicht, kann die Fläche dabei ausdrücklich auch an sich gekrümmt verlaufen, können sich die Flächenrichtungen lokal also auch unterscheiden (an einer jeweiligen Stelle liegen die Flächenrichtungen aber immer senkrecht zur Dickenrichtung). Die Dicke muss im Übrigen nicht über die gesamte Fläche des Transmissionsfensters variieren, sondern kann auch in einem Teilbereich konstant sein (der bevorzugt nicht mehr als 50 % bzw. 30 % ausmachen soll).

Bei einer bevorzugten Ausführungsform erfindungsgemäß ist die Lichteintritts- und/oder die Lichtaustrittsfläche des Transmissionsfensters derart gewölbt, dass das Transmissionsfenster in den zur Längsachse senkrechten Schnittebenen betrachtet als Linse wirkt, also die Lichtstärkeverteilung dem Transmissionsfenster unmittelbar vorgelagert eine andere als unmittelbar nachgelagert ist. Diese Veränderung ist unabhängig von der ohnehin gegebenen Hüllkolben-Krümmung, welche bei konstanter Dicke im Prinzip keinen Einfluss auf die Lichtstärkeverteilung hätte. Biegt man den Hüllkolben mit Linsenfunktion gedanklich zu einem planen Körper, hätte dieser unter Vernachlässigung von gen/Stauchungen eine über seine Fläche konstante Grunddicke, zu welcher sich lokal die Linsendicke addiert. Dieser gedanklich als plan angenommene Körper kann bspw. die Form einer plan-konvexen oder konvex-konvexen Linse haben.

In bevorzugter Ausgestaltung ist die Lichtstärkeverteilung mit dem Hüllkolben mit Linsenfunktion derart angepasst, dass die Lichtstärke in einem Winkelbereich zwischen 30° und 60° dem Transmissionsfenster unmittelbar nachgelagert zumindest im Mittel (über diesen Winkelbereich gemittelt) erhöht ist im Vergleich zur Lichtstärke dem Transmissionsfenster unmittelbar vorgelagert. Die 0°-Achse, an welcher die Lage des Winkelbereichs festgemacht ist, liegt bevorzugt dort, wo die Lichtstärke dem Transmissionsfenster unmittelbar vorgelagert maximal ist. Die 0°-Achse kann bspw. auch auf einer Flächennormalen auf eine Abstrahlfläche des jeweiligen LED-Chips liegen, wobei die Flächennormale in den Flächenschwerpunkt der Abstrahlfläche gelegt wird (bei bevorzugter Lambertscher Abstrahlcharakteristik ist auf dieser 0°-Achse auch die Lichtstärke dem Transmissionsfenster vorgelagert maximal) .

Die über den Winkelbereich zumindest im Mittel gegebene Erhöhung kann bspw. bei mindestens 10 %, bevorzugt mindestens 15 %, besonders bevorzugt mindestens 20 %, liegen; mögliche Obergrenzen liegen (davon unabhängig) bspw. bei höchstens 80 % bzw. 60 %. Bevorzugt ist die Lichtstärke dem Transmissionsfenster nachgelagert über den gesamten Winkelbereich erhöht. Mit der Linsenfunktion wird jedenfalls Licht in diesen Winkelbereich hinein verteilt.

Bevorzugt ist die Lichtstärkeverteilung in besagter Schnittebene zur 0°-Achse spiegelsymmetrisch, ist also auch bei einem Winkel zwischen -30° und -60° die Lichtstärkeverteilung dem Transmissionsfenster nachgelagert entsprechend erhöht. Generell wird bei diesem Vergleich (vor/nach dem Transmissionsfenster) jeweils dieselbe zur Längsachse senkrechte Schnittebene zugrunde gelegt. Bevorzugt ist eine entsprechende Umverteilung zumindest für jene Schnittebenen gegeben, die jeweils eine der LEDs schneiden, besonders bevorzugt für sämtliche das Transmissionsfenster senkrecht zur Längsachse schneidenden Schnittebenen.

Bei einer bevorzugten Ausführungsform ist die Lichteintritts- und/oder die Lichtaustrittsfläche, bevorzugt ausschließlich die Lichteintrittsfläche, mit einer Mesostruktur zur Lichtmischung durch geometrische Strahlenoptik geformt. Die Lichtmischung erfolgt also durch Brechung an geometrisch definierten Strukturen, was Effizienzvorteile bieten kann. Auf der jeweiligen Lichtdurchtrittsfläche sind die die Mesostruktur bildenden Erhebungen dabei derart angeordnet, dass jede der Erhebungen zu ihrer jeweils nächstbenachbarten Erhebung einen Abstand von mindestens 100 µm, in dieser Reihenfolge zunehmend bevorzugt mindestens 200 µm, 300 µm, 400 µm, 500 µm, 600 µm, 700 µm, 800 µm, 900 µm bzw. 1000 µm; mögliche Obergrenzen können (davon unabhängig) bspw. bei höchstens 10 mm, 8 mm, 6 mm, 4 mm bzw. 2 mm liegen.

Je Erhebung wird dabei der Abstand zur "nächstbenachbarten" Erhebung betrachtet, also zu jener Erhebung, zu welcher der Abstand am kleinsten ist. Zur Abstandsermittlung wird eine Projektion der Erhebungen entlang der Dickenrichtung (en) auf die gedacht ungestörte, also von der Mesostruktur freie Lichtdurchtrittsfläche genommen und werden die Flächenschwerpunkte und deren Abstände zueinander zugrunde gelegt (ein Flächenschwerpunkt je projizierter Erhebung).

Bevorzugt haben die Erhebungen jeweils in einer zur Beleuchtungsvorrichtungs-Längsachse senkrechten Schnittebene betrachtet eine dreieckige Form, wobei die Dreiecke weiter bevorzugt jeweils zu ihrer freien Ecke hin im Rahmen des technisch Möglichen in einem Punkt zulaufen, besonders bevorzugt spitzwinklig. In Bezug auf die Beleuchtungsvorrichtungs-Längsrichtung können die Erhebungen bevorzugt translationssymmetrisch sein, also zwischen sich dann entsprechend langgestreckte Rillen bilden.

In einer zur Beleuchtungsvorrichtungs-Längsachse senkrechten Schnittebene betrachtet können sich bspw. zwei Einhüllende an die Mesostruktur legen lassen, eine tangential an die Maxima der Erhebung und die andere tangential an die jeweils zwischen den Maxima ausgebildeten Minima. Diese beiden Einhüllenden haben bevorzugt einen konstanten Abstand, etwa von mindestens 200 µm, 400 µm, 600 µm, 800 µm bzw. 1000 µm (in der Reihenfolge der Nennung zunehmend bevorzugt), wobei (davon unabhängig) mögliche Obergrenzen bspw. bei höchstens 10 mm, 8 mm, 6 mm, 4 mm bzw. 2 mm, liegen. Generell ist die Mesostruktur bevorzugt regelmäßig aufgebaut, sind die Erhebungen also regelmäßig angeordnet und gefasst (mit konstanter Höhe / konstantem Abstand).

Bei einer bevorzugten Ausführungsform sind die Partikel jeweils mit einer Magnet-Vorzugsrichtung magnetisch, die mit der Ablenkungsachse und der Passierachse des jeweiligen Partikels korreliert. "Korrelieren" meint, dass für die Partikel Ablenkungs- und Passierachse sowie die Magnet-Vorzugsrichtung jeweils im selben festen Verhältnis zueinander stehen (im Rahmen technisch üblicher Schwankungen), bevorzugt liegt die Magnet-Vorzugsrichtung parallel zur Passierachse. Die Partikel lassen sich so durch ein äußeres Magnetfeld in gleicher Weise beeinflussen und in gewünschter Weise ausrichten. Die Partikel richten sich mit ihrer jeweiligen Magnet-Vorzugsrichtung jeweils soweit möglich parallel zu den Feldlinien des äußeren Magnetfelds aus.

Die Partikel können einerseits jeweils im Gesamten, also über ihr gesamtes jeweiliges Volumen, magnetisch sein. Andererseits können die Partikel auch aus einem nichtmagnetischen Teilchen mit einem daran angelagerten magnetischen Material vorgesehen sein, das im Allgemeinen auch als Beschichtung aufgebracht sein kann, bevorzugt jedoch jeweils als Teilchen angelagert ist. Bei dem nichtmagnetischen Teilchen kann es sich dann bspw. um Siliziumoxid oder Aluminiumnitrit handeln, als magnetische Teilchen können bspw. superparamagnetische Nanopartikel vorgesehen sein, etwa Eisenoxid. Die Anlagerung kann bspw. in einer Suspension erfolgen.

In einer zu der Ausrichtung von Partikeln mit Magnet-Vorzugsrichtung analogen Weise ist es auch denkbar, Partikel mit einer elektrischen Vorzugsrichtung vorzusehen, wobei jeweils die elektrische Vorzugsrichtung mit Ablenk- und Passierachse des jeweiligen Partikels korreliert. Dazu können bspw. Partikel vorgesehen werden, die bereits originär ein Dipolmoment haben. In einem externen elektrischen Feld können die Partikel dann ausgerichtet werden, vom Prinzip her der vorstehenden Beschreibung zu den magnetischen Partikeln vergleichbar.

Wie bereits eingangs erwähnt, betrifft die Erfindung auch ein Verfahren zum Herstellen einer vorliegend offenbarten Beleuchtungsvorrichtung, wobei die Partikel relativ zur Beleuchtungsvorrichtungs-Längsachse so ausgereichtet werden, dass sich die jeweiligen Ablenkungsachsen entlang dieser Längsachse erstrecken. Bevorzugt kann eine Herstellung des Transmissionsfensters durch Extrusion oder Spritzguss sein.

Eine bevorzugte Ausführungsform betrifft die Herstellung einer Beleuchtungsvorrichtung mit gekrümmtem Hüllkolben, wobei das Transmissionsfenstermaterial in Form einer flächigen Platte vorgesehen wird, welche um eine Achse gebogen und so in die gekrümmte Form des Hüllkolbens gebracht wird. Die flächige Platte ist bevorzugt plan. Diese Ausführungsform kann etwa insoweit vorteilhaft sein, als sich die Partikel in der flächigen Platte gut ausrichten lassen, etwa wenn dazu das Transmissionsköpermaterial mit den darin vorgesehen Partikeln (in Dickenrichtung der Platte) gepresst und anschließend auf sich selbst zurückgelegt wird, um dann erneut gepresst zu werden; nach mehreren solchen Schritten sind dann bspw. längliche Partikel mit ihrer Längsachse im Wesentlichen flächenrichtungsparallel ausgerichtet.

Bei einer bevorzugten Ausführungsform sind in einer Platte, welche bevorzugt gekrümmt wird (siehe vorne), Partikel mit originär isotropen Lichtablenkungseigenschaften vorgesehen. Die Platte wird dann in einer ihrer (zur Dickenrichtung senkrechten) Flächenrichtungen derart gestreckt, dass die Partikel mit verformt werden, also in derselben Richtung gestreckt werden. Mit dem Strecken der Platte erhalten die Partikel dann also bspw. ihre längliche Form und ihre anisotropen Eigenschaften. Die gestreckte Platte kann dann bspw. anschließend zu dem gekrümmten Hüllkolben gebogen werden. Es ist aber auch möglich, das Strecken und Biegen in einem Schritt vorzunehmen. Die Platte mit den originär isotropen Partikeln kann dann also gewissermaßen zu der Hüllkolbenform hin (gewissermaßen in diese hinein) gestreckt werden, etwa in einem Tiefziehprozess zugleich gestreckt und gekrümmt werden.

Bei einer bevorzugten Ausführungsform, welche die vorstehend genannten magnetischen Partikel betrifft, wird ein Ausgangsmaterial des Kunststoffmaterials in einem fließfähigen Zustand vorgesehen, wobei die Partikel darin verteilt sind und vor dem Aushärten durch Aufbringen eines externen Magnetfelds ausgerichtet werden. Vorzugsweise sind Magnet-Vorzugsrichtung und Passierachse jeweils parallel, richten sich also beide entlang der Feldlinien des externen Magnetfelds aus. Das "Ausgangsmaterial" des Kunststoffmaterials kann im Allgemeinen auch eine Vorstufe davon sein, sodass das Kunststoffmaterial im Zuge des Aushärtens infolge chemischer Reaktionen erst entsteht. Bevorzugt ist das Ausgangsmaterial gleich dem Kunststoffmaterial und liegt es bei einer erhöhten Temperatur vor.

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und in dieser Form offenbart sein sollen; es wird auch weiterhin nicht im Einzelnen zwischen den unterschiedlichen Anspruchskategorien unterschieden.

Im Einzelnen zeigt
- Figur 1: ein Kunststoffmaterialvolumen mit darin eingebetteten und identisch ausgerichteten anisotropen Lichtablenkungspartikeln;
- Figur 2a-c: für drei unterschiedliche Brechungsindizes der Lichtablenkungspartikel gemäß Figur 1 jeweils dem Materialvolumen nachgelagert die Intensitätsverteilung in zwei zueinander senkrechten Ebenen in Abhängigkeit vom Winkel;
- Figur 3a: in einem Schnitt senkrecht zur Längsachse eine Beleuchtungsvorrichtung mit einem als Hüllkolben gekrümmten Transmissionsfenster mit zusätzlich einer Linsenfunktion;
- Figur 3b: zu der Beleuchtungsvorrichtung gemäß Figur 3a einen schematischen Schnitt in einer die Längsachse beinhaltenden Ebene;
- Figur 4: eine Lichtverteilungskurve für die Beleuchtungsvorrichtung gemäß Figur 3 im Vergleich zu einer Lichtverteilungskurve einer Beleuchtungsvorrichtung mit einem Hüllkolben konstanter Dicke;
- Figur 5: eine weitere Beleuchtungsvorrichtung mit einem als Hüllkolben gekrümmten Transmissionsfenster, wobei dieses zusätzlich eintrittsseitig mit einer Mesostruktur zur Lichtmischung geformt ist;
- Figur 6: eine Lichtverteilungskurve zu der Beleuchtungsvorrichtung gemäß Figur 5, wiederum im Vergleich zu einem Hüllkolben konstanter Dicke.

### Bevorzugte Ausführung der Erfindung

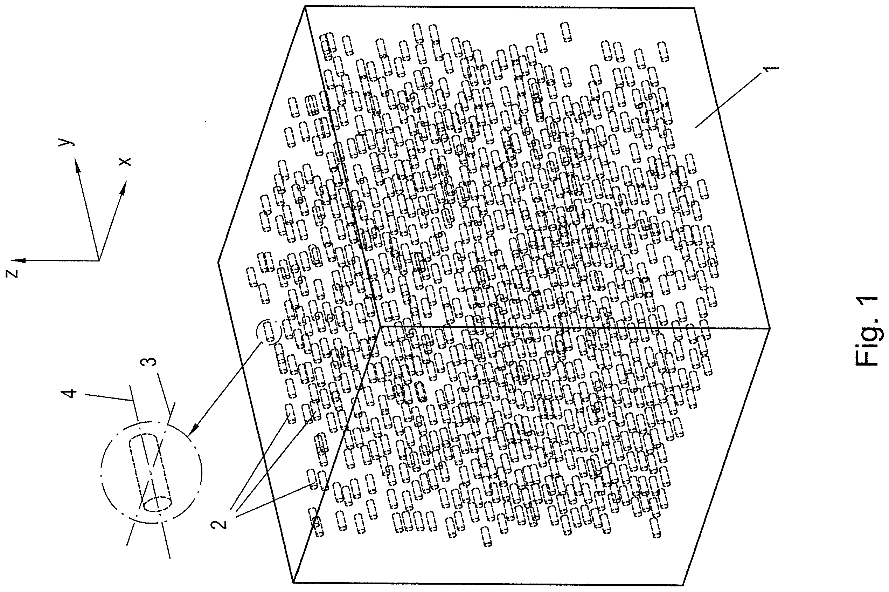

Figur 1 zeigt ein würfelförmiges, mit einem Transmissionsfenstermaterial 1 gefülltes Volumen, in welches zylinderförmige Lichtablenkungspartikel 2 eingebettet sind. Ein vergleichbares Modell lag einer Simulation der Erfinder zugrunde, wobei für das Kunststoffmaterial Polymethylmethacrylat mit einem Brechungsindex n_{PMMA} = 1,49 angenommen wurde. Die Partikel hatten jeweils einen Durchmesser von 20 µm (Querachse) und eine Länge von 50 µm (Längsachse). In einem Würfel der Größe 1 x 1 x 1 mm³ waren dabei 2.000 solcher Partikel zufallsverteilt platziert, jedoch sämtlich mit ihrer jeweiligen Längsachse parallel zur y-Achse ausgerichtet.

In der Simulation wurde dann untersucht, wie ein entlang der z-Achse einfallender, perfekt kollimierter Laserstrahl in dem Würfel abgelenkt wird. Dabei wurden für die Partikel in drei unterschiedlichen Simulationen drei unterschiedliche Brechungsindizes von n_{Partikel} = 1,52, n_{Parti-kel} = 1,62 und n_{Partikel} = 1,72 angenommen und wurde die Lichtablenkung in der (x,z)-Ebene mit der Lichtablenkung in der (y,z)-Ebene verglichen.

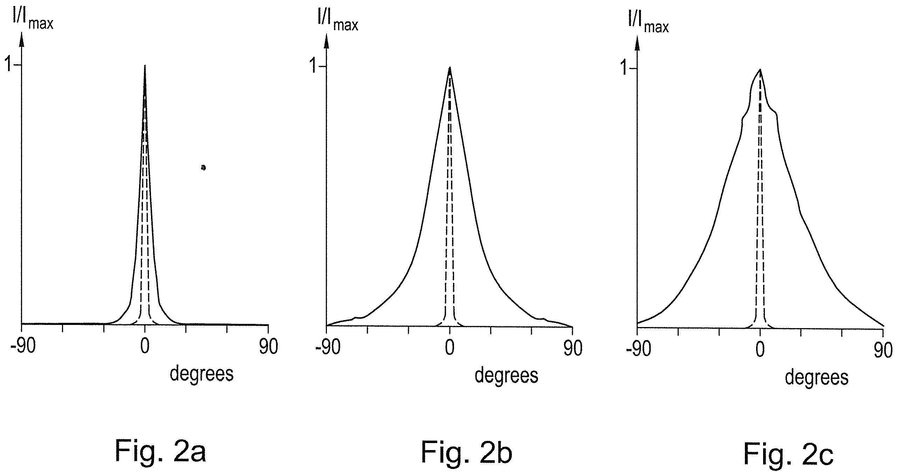

Das Ergebnis ist in den Figuren 2a (n_{Partikel} = 1,52) bis 2c (n_{Partikel} = 1,72) gezeigt. Dabei ist für das Licht dem Würfel nachgelagert die Intensität in Abhängigkeit vom Winkel zur z-Richtung aufgetragen, jeweils einmal in der (x,z)-Ebene (durchgezogene Linie) und einmal in der (y,z)-Ebene (strichlierte Linie).

In der (y,z)-Ebene wird das Strahlenbündel kaum aufgeweitet, weswegen diese Ebene auch als "Passierebene" bezeichnet wird. Dies ist auch im Prinzip unabhängig vom Brechungsindex n_{Partikel}. In der dazu senkrechten (x, z)-Ebene wird das Strahlenbündel hingegen mit zunehmendem Brechungsindex auch zunehmend aufgeweitet, weswegen diese Ebene auch als "Ablenkungsebene" bezeichnet wird.

Die vergrößerte Darstellung in Fig. 1 zeigt eines der Partikel im Detail, welches in der Passierebene als planparallele Platte und in der dazu senkrechten Ablenkungsebene als Kreisform erscheint. Dementsprechend wird das Licht entlang einer in der Ablenkungsebene liegenden Ablenkungsachse 3 stärker aufgefächert als entlang einer dazu senkrechten Passierachse 4.

Zusammengefasst hat der Würfel mit dem Transmissionsfenstermaterial 1 und den darin eingebetteten Partikeln 2 aufgrund deren gerichteter Orientierung anisotrope optische Eigenschaften. Vereinfacht gesprochen "sieht" das einfallende Strahlenbündel in der Ablenkungsebene (und in dazu parallelen Ebenen) kreisförmige Linsen mit jeweils gekrümmter Eintritts- und Austrittsfläche, wohingegen in der Passierebene (und den dazu parallelen Ebenen) die Partikel als planparallele Platten wirken.

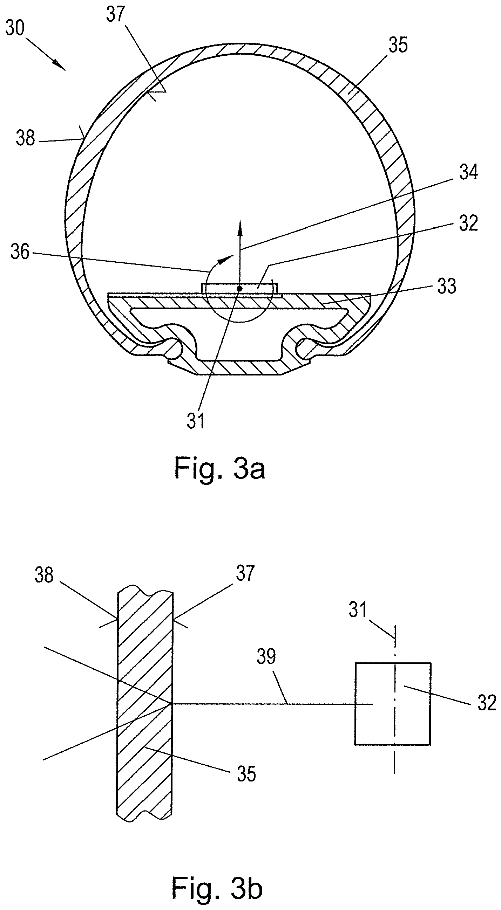

Figur 3 zeigt nun eine Beleuchtungsvorrichtung 30, bei welcher diese anisotropen optischen Eigenschaften in erfindungsgemäßer Weise genutzt werden. Es handelt sich hierbei um einen Ersatz für eine Leuchtstofflampe, wobei ein Schnitt senkrecht zu einer Längsachse 31 gezeigt ist. Entlang der Längsachse 31 sind eine Mehrzahl LEDs 32 mit jeweils einem Abstand zwischeneinander in einer Reihe nebeneinander angeordnet (in die Zeichenebene hinein). Der Schnitt geht durch eine der LEDs 32.

Die LEDs 32 sind auf einem in Bezug auf die Längsachse 31 translationssymmetrisch aufgebauten Kühlkörper 33 montiert, bspw. aufgeklebt oder aufgelötet, und über (nicht dargestellte) Bonddrähte miteinander in Serie geschaltet. In Bezug auf die Längsachse 31 beiderends der Beleuchtungsvorrichtung 30 ist jeweils ein Sockel (nicht dargestellt) angeordnet, die Beleuchtungsvorrichtung kann als Ersatz für eine Leuchtstofflampe in eine Leuchte eingesetzt werden. Von den LEDs 32 wird das Licht jeweils mit einer Lambertschen Abstrahlcharakteristik um eine Hauptrichtung 34 abgegeben. Das Licht durchsetzt dann ein als länglicher, gekrümmter Hüllkolben ausgebildetes Transmissionsfenster 35, welches formschlüssig mit dem Kühlkörper 33 verrastet ist.

Das Transmissionsfenster 35 ist aus dem anhand von Figur 1 erläuterten Transmissionsfenstermaterial (PMMA) mit darin eingebetteten und gerichtet orientierten Partikeln vorgesehen, was aber der Übersichtlichkeit halber nicht im Einzelnen dargestellt ist. Die Partikel sind in dem Transmissionsfenster 35 derart orientiert, dass die jeweilige Ablenkungsachse parallel zur Längsachse 31 und die jeweilige Passierachse in Umlaufrichtung 36 orientiert ist. Die Partikel erstrecken sich also jeweils mit ihrer Längsachse entlang der Umlaufrichtung 36.

Das von den LEDs 32 emittierte Licht fällt auf eine Lichteintrittsfläche 37 des Transmissionsfensters 35, durchsetzt dieses und tritt an einer entgegengesetzten Lichtaustrittsfläche 38 aus, jedenfalls zum Großteil, von einer möglichen Rückstreuung abgesehen. An den in das Transmissionsfenster 35 eingebetteten und gerichtet orientierten Partikeln wird das Licht nun richtungsabhängig unterschiedlich aufgeweitet. Aufgrund der beschriebenen Orientierung fällt der gezeigte Schnitt mit einer Passiereben zusammen, sämtliche Passierebenen erstrecken sich senkrecht zur Längsachse 31. In diesen Passierebenen, also auch in der Zeichenebene, findet im Prinzip keine Ablenkung durch die Partikel statt, weil das Licht jeweils planparallele Platten "sieht".

Die Ablenkungsachsen sind parallel zur Längsachse 31 orientiert, die Ablenkungsebenen stehen also senkrecht auf der Zeichenebene. In diesen Ablenkungsebenen werden jeweilig einfallende Strahlenbündel von den Partikeln aufgeweitet und damit überlagert. Figur 3b illustriert schematisch, wie ein Strahlenbündel 39 in einer Ablenkungsebene auf die Lichteintrittsfläche 37 des Transmissionsfensters 35 fällt, dieses durchsetzt und dabei aufgeweitet wird. Der Einfachheit halber ist das Strahlenbündel 39 dem Transmissionsfenster 35 vorgelagert als einfacher, kollimierter Strahl dargestellt.

Da nun in realiter eine Vielzahl Strahlen aus unterschiedlichen Richtungen auf unterschiedliche Stellen der Lichteintrittsfläche 37 fallen, werden eine Vielzahl entsprechend aufgeweitete Strahlenbündel überlagert, was die Beleuchtungsstärkeverteilung austrittsseitig homogenisiert. Auf der Lichteintrittsfläche 37 kann sich nämlich aufgrund der Anordnung der LEDs 32 zueinander beabstandet eine schwankende Beleuchtungsstärkeverteilung einstellen, die durch die Aufweitung und Überlagerung dann auf der Austrittsfläche 38 weitgehend homogenisiert sein kann. In der Konsequenz erscheinen die mit Abstand zueinander angeordneten LEDs dann auf die Lichtaustrittsfläche 38 blickend nicht mehr als einzelne Lichtpunkte, sondern als durchgehender leuchtender Streifen.

Bei der anhand von Figur 1 erläuterten und in den vorstehenden Absätzen als Erklärung zugrunde gelegten Simulation wurden allein Brechungseffekte berücksichtigt. Die Erfinder haben jedoch auch deutlich kleinere, ebenfalls längliche Partikel simulatorisch untersucht. Dabei wurden Beugungseffekte berücksichtigt, weswegen die Simulation aufgrund des erhöhten Rechenaufwands nur an einem Einzelpartikel vorgenommen werden konnte. Die Abhängigkeit bleibt jedoch dieselbe, die Längsachse des Partikels fällt mit der Passierachse zusammen. Eine Ausführungsform wie in Figur 3a gezeigt ließe sich also auch mit deutlich kleineren Partikeln auf der Größenordnung einiger Mikrometer realisieren.

Die Orientierung der Partikel in dem Transmissionsfenster 35 kann bspw. im noch nicht gehärteten Transmissionsfenstermaterial durch Anlegen eines externen Magnetfelds unterstützt werden, soweit Partikel mit zu Passier-/Ablenkachse korrelierter Magnet-Vorzugsrichtung verwendet werden. Die Orientierung kann aber auch bereits beim Spritzgießen/Extrudieren aufgrund der Materialströmung erfolgen, wobei bei der Extrusion Verwirbelungsmittel notwendig sein können, um die Partikel in gewünschter Weise in Umlaufrichtung zu orientieren. Beim Spritzgießen richten sich die Partikel typischerweise entlang der Fließrichtung aus, weswegen beim Spritzgießen des Transmissionsfensters 35 gemäß Figur 3a die Einspritzkanäle das Kunststoffmaterial bspw. von oben zuführen würden, sodass sich dieses dann in Umlaufrichtung (und entgegengesetzt) gleichmäßig auf die linke und rechte Hälfte aufteilen würde.

Aufgrund ihrer anisotropen Eigenschaften und gerichteten Orientierung wird von den Partikeln in den Passierebenen kaum Licht abgelenkt, gibt es also in diesen Ebenen im Prinzip keine Streuprozesse. Das Licht bleibt deshalb für eine Ablenkung durch geometrische Strahlenoptik zugänglich, es kann der Lichteintrittsfläche 37 und/oder der Lichtaustrittsfläche 38 also eine gewölbte Form zur Anpassung der Lichtverteilung im Fernfeld aufmoduliert werden. Aus dem Schnitt gemäß Figur 3a ist ersichtlich, dass das Transmissionsfenster 35 ab einem Winkel von ca. 30° zur Hauptrichtung 34 mit zunehmender Dicke geformt ist, wobei die Dicke nach einem Maximum dann zu größeren Winkeln hin wieder abnimmt. Dem Transmissionsfenster 35 ist eine Linsenfunktion aufmoduliert.

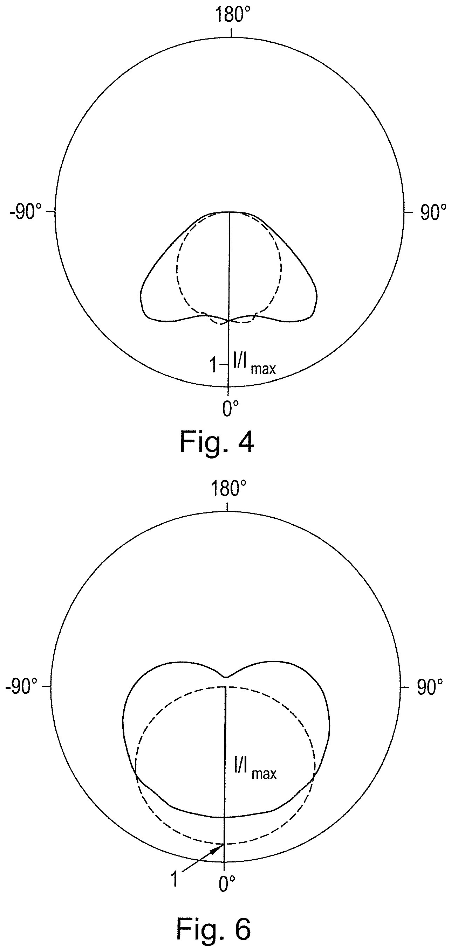

Figur 4 zeigt in einem Polardiagramm die Lichtverteilung im Fernfeld, und zwar in einer zur Längsachse 31 senkrechten Schnittebene. Die Hauptrichtung 34 ist parallel zu der 0°-Achse orientiert, die Anordnung ist gegenüber Figur 3 also um 180° gedreht. In dem Polardiagramm ist dabei die normierte Lichtstärke I/Iₘₐₓ aufgetragen, und zwar einmal für die Beleuchtungsvorrichtung 30 gemäß Figur 3a (durchgezogene Linie) und zum Vergleich für eine Beleuchtungsvorrichtung, die vom Transmissionsfenster 35 abgesehen identisch aufgebaut ist. In dem Vergleichsfall ist das Transmissionsfenster mit konstanter Dicke geformt, also mit konstantem Abstand zwischen Lichteintritts- und Lichtaustrittsfläche.

Dieser Vergleich illustriert, dass durch das Transmissionsfenster 35 mit Linsenfunktion das Licht von der 0°-Achse, also der Hauptrichtung 34, weg verteilt wird, die Lichtstärke ist jedenfalls in einem Winkelbereich zwischen 30° und 60° (bei positiven und negativen Winkeln) gegenüber dem Vergleichsfall erhöht. In dem Vergleichsfall verändert das Transmissionsfenster die Lichtverteilung der LEDs kaum, sie bleibt also im Wesentlichen Lambertsch; das Maximum liegt auf der 0°-Achse. Die mit dem Transmissionsfenster 35 gemäß Figur 3a erzeugte Lichtverteilung kann hingegen bspw. besser geeignet sein, eine Fläche, etwa eine Arbeitsfläche wie einen Schreibtisch, gleichmäßig auszuleuchten.

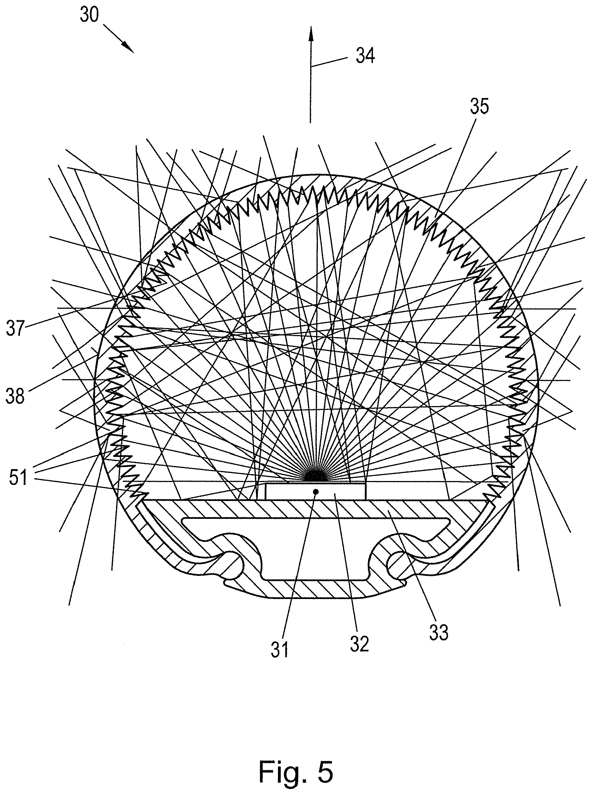

Figur 5 zeigt eine weitere Beleuchtungsvorrichtung 30, die von der Ausgestaltung des Transmissionsfensters 35 im Detail abgesehen jener gemäß Figur 3a entspricht. Insoweit und auch generell bezeichnen im Rahmen dieser Offenbarung dieselben Bezugszeichen Teile mit derselben Funktion und wird auch immer auf die Beschreibung zu den jeweilig anderen Figuren verwiesen. Auch bei der Beleuchtungsvorrichtung 30 gemäß Figur 5 sind anisotrope Partikel in das aus PMMA vorgesehene Transmissionsfenster 35 eingebettet und mit ihrer jeweiligen Längsachse/Passierachse entlang der Umlaufrichtung ausgerichtet (der Übersichtlichkeit halber nicht gezeigt). Die Passierebenen liegen wiederum in/parallel zu der Zeichenebene, die Ablenkebenen senkrecht dazu.

Auch bei der Ausführungsform gemäß Figur 5 ist das Transmissionsfenster 35 mit einer über den Umlauf variierenden Dicke gefasst, und zwar mit einer Mesostruktur geformt. Die Lichteintrittsfläche 37 ist mit einer Vielzahl die Mesostruktur bildenden Erhebungen 51 geformt, die im Schnitt dreieckförmig und entlang der Längsachse 31 jeweils translationssymmetrisch sind. Jede der Erhebungen 51 läuft zu einer der LED 31 zugewandten Ecke hin spitzwinklig zu. Der Abstand zwischen jeweils zwei nächstbenachbarten Erhebungen 51 beträgt in der Umlaufrichtung ca. 1 mm; die Erhebungen 51 haben jeweils eine Höhe von ca. 2 mm.

In Figur 5 sind exemplarisch mit einer *Raytracing-*Simulation ermittelte Strahlengänge gezeigt, die Mesostruktur verteilt das Licht von den Richtungen um die Hauptrichtung 34 zur Seite und insbesondere auch in den Rückraum. Die Lichtverteilungskurve gemäß Figur 6 veranschaulicht die somit erreichte Lichtverteilung (durchgezogene Linie) im Vergleich zum Referenzfall mit einem Transmissionsfenster konstanter Dicke (strichliert). Die Anordnung ist gegenüber Figur 5 wiederum um 180° gedreht, die Hauptrichtung 34 weist also entlang der 0°-Achse nach unten. Aufgetragen ist wiederum die normierte Strahlstärke.

Der Vergleich der beiden Kurven illustriert, dass mit der Mesostruktur gemäß Figur 5 Licht von den Richtungen um die Hauptrichtung 34 weg hin zu größeren Winkeln und insbesondere auch in den Rückraum (>90°/<-90°) verteilt wird. Mit der Mesostruktur kann die Abstrahlcharakteristik ein Stück weit jener einer konventionellen Leuchtstofflampe angenähert werden, sodass bspw. auch ein in einer Leuchte bereits bestehendes Reflektorkonzept (der Reflektor ist im Rückraum angeordnet) weiter genutzt werden kann.

## Patentansprüche

1. Beleuchtungsvorrichtung (30) mit
einer Mehrzahl LEDs (32) zur Emission von Licht, die entlang einer Längsachse (31) der Beleuchtungsvorrichtung nebeneinander angeordnet sind, und
einem flächigen Transmissionsfenster (35) aus einem für das von den LEDs (32) emittierte Licht transparent transmissiven Transmissionsfenstermaterial (1),
wobei das Transmissionsfenster (35) zu den LEDs (32) über ein Gasvolumen beabstandet angeordnet ist und zumindest ein Großteil des von den LEDs (32) emittierten Lichts das Transmissionsfenster (35) durchsetzt,
und wobei in das Transmissionsfenstermaterial (1) anisotrope Lichtablenkungspartikel (2) eigebettet sind, die jeweils eine Ablenkungsachse (3) und eine dazu senkrechte Passierachse (4) haben, wobei senkrecht zu den beiden Achsen (3, 4) einfallendes Licht auf der Ablenkungsachse (3) stärker aufgefächert wird als auf der Passierachse (4),
und wobei die Lichtablenkungspartikel (2) mehrheitlich so ausgerichtet sind, dass sich die jeweiligen Ablenkungsachsen (3) entlang der Längsachse (31) der Beleuchtungsvorrichtung (30) erstrecken,
und wobei das Transmissionsfenster (35) in Form eines länglichen Hüllkolbens ausgebildet ist, sich also in zu der Längsachse (31) senkrechten Schnittebenen betrachtet gekrümmt und infolgedessen zumindest teilweise um die Längsachse (31) umlaufend erstreckt,
**dadurch gekennzeichnet, dass** das Transmissionsfenster (35) mit einer über seine Fläche variierenden Dicke gefasst ist,
wobei zumindest eine von zwei einander in Bezug auf eine Dickenrichtung entgegengesetzten Lichtdurchtrittsflächen (37, 38) des Transmissionsfensters (35) derart gewölbt ist, dass das Transmissionsfenster (35) in den zu der Längsachse (31) senkrechten Schnittebenen betrachtet als Linse wirkt, also eine Lichtstärkeverteilung dem Transmissionsfenster (35) vorgelagert eine andere als dem Transmissionsfenster (35) nachgelagert ist.

2. Beleuchtungsvorrichtung (30) nach Anspruch 1, bei welchem die Lichtablenkungspartikel (2) aus einem für das von den LEDs (32) emittierte Licht transmissiven Lichtablenkungspartikel-Material vorgesehen sind, das einen Brechungsindex n_{Partikel} hat, der sich von einem Brechungsindex n_{Transmissionsfenster} des Transmissionsfenstermaterials (1) um den Betrag nach mindestens 0,02 unterscheidet.

3. Beleuchtungsvorrichtung (30) nach Anspruch 1 oder 2, bei welcher die Lichtablenkungspartikel (2) jeweils eine längliche Form haben, wobei je Lichtablenkungspartikel (2) ein Verhältnis von parallel zu der Passiersachse (4) genommener Erstreckung zu parallel zu der Ablenkungsachse (3) genommener Erstreckung bei mindestens 4:3 liegt.

4. Beleuchtungsvorrichtung (30) nach einem der vorstehenden Ansprüche, bei welcher die Lichtablenkungspartikel (2) jeweils eine parallel zu der Passierachse (4) genommene Erstreckung von mindestens 1 µm und von höchstens 200 µm haben.

5. Beleuchtungsvorrichtung (30) nach einem der vorstehenden Ansprüche, bei welcher das Transmissionsfenster (35) ein Extrusionsteil oder Spritzgussteil ist.

6. Beleuchtungsvorrichtung (30) nach einem der vorstehenden Ansprüche, bei welcher in jeweils einer der zu der Längsachse (31) senkrechten Schnittebenen betrachtet in einem Winkelbereich, der sich zwischen 30° und 60° gegenüber einer 0°-Achse erstreckt, die Lichtstärke dem Transmissionsfenster (35) unmittelbar nachgelagert im Vergleich zu der Lichtstärke dem Transmissionsfenster (35) unmittelbar vorgelagert zumindest im Mittel erhöht ist.

7. Beleuchtungsvorrichtung (30) nach einem der vorstehenden Ansprüche, bei welcher zumindest eine von zwei einander in Bezug auf eine Dickenrichtung entgegengesetzten Lichtdurchtrittsflächen (37, 38) des Transmissionsfensters (35) mit einer Mesostruktur zur Lichtmischung durch geometrische Strahlenoptik geformt ist, wobei die Mesostruktur bildende Erhebungen (51), die auf derselben Lichtdurchtrittsfläche (37, 38) angeordnet sind, mit jeweils einem Abstand von mindestens 100 µm zwischen nächstbenachbarten Erhebungen angeordnet sind.

8. Beleuchtungsvorrichtung (30) nach einem der vorstehenden Ansprüche, bei welcher die Lichtablenkungspartikel (2) jeweils magnetisch sind, und zwar jeweils mit einer Magnet-Vorzugsrichtung, die mit der Ablenkungsachse (3) und der Passierachse (4) des jeweiligen Lichtablenkungspartikels (2) korreliert.

9. Verfahren zum Herstellen einer Beleuchtungsvorrichtung (30) nach einem der vorstehenden Ansprüche, wobei die Lichtablenkungspartikel (2) relativ zu der Längsachse (31) mehrheitlich so ausgerichtet werden, dass sich die jeweiligen Ablenkungsachsen (3) entlang der Längsachse (31) der Beleuchtungsvorrichtung (30) erstrecken.

10. Verfahren nach Anspruch 9 zum Herstellen einer Beleuchtungsvorrichtung (30) nach einem der Ansprüche 1 bis 8, wobei das Transmissionsfenstermaterial (1) in Form einer flächigen Platte vorgesehen wird, welche Platte um eine Achse gebogen und so in die gekrümmte Form des Hüllkolbens gebracht wird.

11. Verfahren nach Anspruch 9 oder 10, bei welchem das Transmissionsfenstermaterial (1) in Form einer flächigen Platte vorgesehen ist und Partikel mit originär isotropen Lichtablenkeigenschaften in die Platte eingebettet sind, wobei die Platte in einer Flächenrichtung derart gestreckt wird, dass sich die Partikel verformen und so zu den anisotropen Lichtablenkungspartikeln (2) werden.

12. Verfahren nach Anspruch 9 oder 10 zum Herstellen einer Beleuchtungsvorrichtung (30) nach Anspruch 8, bei welchem ein Ausgangsmaterial des Transmissionsfenstermaterials (1) in einem fließfähigen Zustand vorgesehen wird, welches Ausgangsmaterial dann zu dem Transmissionsfenster (35) aushärtet, wobei die Lichtablenkungspartikel (2) in dem Ausgangsmaterial verteilt sind und vor dem Aushärten des Ausgangsmaterials durch Aufbringen eines externen Magnetfeldes ausgerichtet werden.

## Claims

1. Lighting device (30) comprising
a plurality of LEDs (32) for emitting light, which are arranged alongside one another along a longitudinal axis (31) of the lighting device, and
a planar transmission window (35) composed of a transmissive transmission window material (1) that is transparent to the light emitted by the LEDs (32), wherein the transmission window (35) is arranged in a manner spaced apart from the LEDs (32) by way of a gas volume and at least a large portion of the light emitted by the LEDs (32) penetrates through the transmission window (35) ,
and wherein anisotropic light deflection particles (2) are embedded into the transmission window material (1), said light deflection particles each having a deflection axis (3) and a passing axis (4) perpendicular thereto, wherein light incident perpendicularly to the two axes (3, 4) is fanned out to a greater extent on the deflection axis (3) than on the passing axis (4),
and wherein the majority of the light deflection particles (2) are aligned such that the respective deflection axes (3) extend along the longitudinal axis (31) of the lighting device (30),
and wherein the transmission window (35) is configured in the form of an elongate envelope bulb, that is to say extends in a curved fashion as viewed in sectional planes perpendicular to the longitudinal axis (31) and, consequently, at least partly circumferentially around the longitudinal axis (31),
**characterized in that** the transmission window (35) is mounted with a thickness that varies over its area,
wherein at least one of two light passage surfaces (37, 38) of the transmission window (35) which are opposite to one another with respect to a thickness direction is curved in such a way that the transmission window (35) as viewed in the sectional planes perpendicular to the longitudinal axis (31) acts as a lens, that is to say that a light intensity distribution upstream of the transmission window (35) is different from that downstream of the transmission window (35) .

2. Lighting device (30) according to Claim 1, wherein the light deflection particles (2) are provided from a light deflection particle material which is transmissive to the light emitted by the LEDs (32) and which has a refractive index n_{particle} that differs from a refractive index n_{transmission window} of the transmission window material (1) by at least 0.02 in terms of the absolute value.

3. Lighting device (30) according to Claim 1 or 2, wherein the light deflection particles (2) each have an elongate shape, wherein for each light deflection particle (2) a ratio of extent taken parallel to the passing axis (4) to extent taken parallel to the deflection axis (3) is at least 4:3.

4. Lighting device (30) according to any of the preceding claims, wherein the light deflection particles (2) each have an extent taken parallel to the passing axis (4) of at least 1 µm and of at most 200 µm.

5. Lighting device (30) according to any of the preceding claims, wherein the transmission window (35) is an extruded part or an injection-moulded part.

6. Lighting device (30) according to any of the preceding claims, wherein as viewed in each case in one of the sectional planes perpendicular to the longitudinal axis (31) in an angular range extending between 30° and 60° relative to a 0° axis, the light intensity directly downstream of the transmission window (35) is increased at least on average in comparison with the light intensity directly upstream of the transmission window (35).

7. Lighting device (30) according to any of the preceding claims, wherein at least one of two light passage surfaces (37, 38) of the transmission window (35) which are opposite to one another with respect to a thickness direction is shaped with a mesostructure for light mixing by geometrical optics, wherein elevations (51) which form the mesostructure and which are arranged on the same light passage surface (37, 38) are arranged in each case at a distance of at least 100 µm between closest adjacent elevations.

8. Lighting device (30) according to any of the preceding claims, wherein the light deflection particles (2) are in each case magnetic, specifically in each case with a preferred magnetic direction that correlates with the deflection axis (3) and the passing axis (4) of the respective light deflection particle (2).

9. Method for producing a lighting device (30) according to any of the preceding claims, wherein the majority of the light deflection particles (2) are aligned relative to the longitudinal axis (31) such that the respective deflection axes (3) extend along the longitudinal axis (31) of the lighting device (30).

10. Method according to Claim 9 for producing a lighting device (30) according to any of Claims 1 to 8, wherein the transmission window material (1) is provided in the form of a planar plate, which plate is bent about an axis and thus brought to the curved shape of the envelope bulb.

11. Method according to Claim 9 or 10, wherein the transmission window material (1) is provided in the form of a planar plate and particles having originally isotropic light deflecting properties are embedded into the plate, wherein the plate is stretched in one area direction in such a way that the particles are deformed and thus become the anisotropic light deflection particles (2).

12. Method according to Claim 9 or 10 for producing a lighting device (30) according to Claim 8, wherein a starting material of the transmission window material (1) is provided in a flowable state, which starting material then cures to form the transmission window (35), wherein the light deflection particles (2) are distributed in the starting material and are aligned by application of an external magnetic field before the curing of the starting material.

## Revendications

1. Dispositif d'éclairage (30) avec
une pluralité de LED (32) pour émettre de la lumière qui sont disposées les unes à côté des autres le long d'un axe longitudinal (31) du dispositif d'éclairage et une fenêtre de transmission (35) plate faite d'un matériau de fenêtre de transmission (1) transmissif transparent à la lumière émise par les LED (32), dans lequel la fenêtre de transmission (35) est espacée des LED (32) par un volume de gaz et au moins une grande partie de la lumière émise par les LED (32) traverse la fenêtre de transmission (35),
dans lequel des particules anisotropes déviant la lumière (2) qui ont chacune un axe de déviation (3) et un axe de passage (4) perpendiculaire à celui-ci sont intégrées dans le matériau de fenêtre de transmission (1), la lumière incidente perpendiculaire aux deux axes (3, 4) étant plus fortement dispersée sur l'axe de déviation (3) que sur l'axe de passage (4),
dans lequel les particules déviant la lumière (2) sont en majorité orientées de sorte que les axes de déviation (3) s'étendent le long de l'axe longitudinal (31) du dispositif d'éclairage (30) et dans lequel la fenêtre de transmission (35) a la forme d'une enveloppe oblongue qui s'étend de manière courbe dans des plans de coupe perpendiculaires à l'axe longitudinal (31) et par conséquent entoure au moins partiellement l'axe longitudinal (31),
**caractérisé en ce que** la fenêtre de transmission (35) est dotée d'une épaisseur variable sur sa surface,
au moins une des deux surfaces de passage de la lumière (37, 38) de la fenêtre de transmission (35) opposées entre elles dans le sens de l'épaisseur étant courbée de sorte que la fenêtre de transmission (35) fait office de lentille dans le plan de coupe perpendiculaire à l'axe longitudinal (31), à savoir qu'une répartition d'intensité lumineuse se fait en amont de la fenêtre de transmission (35) et une autre en aval de la fenêtre de transmission (35) .

2. Dispositif d'éclairage (30) selon la revendication 1, dans lequel il est prévu que les particules déviant la lumière (2) sont faites d'un matériau de particules déviant la lumière transmissif transparent à la lumière émise par les LED (32) qui a un indice de réfraction n_{particules} qui diffère de l'indice de réfraction n_{fenêtre}__{de}_ₜᵣₐₙₛₘᵢₛₛᵢₒₙ du matériau de fenêtre de transmission (1) d'une valeur d'au moins 0,02.

3. Dispositif d'éclairage (30) selon la revendication 1 ou 2, dans lequel les particules déviant la lumière (2) ont une forme oblongue, chaque particule déviant la lumière (2) ayant un rapport de l'extension parallèle à l'axe de passage (4) à l'extension parallèle à l'axe de déviation (3) d'au moins 4:3.

4. Dispositif d'éclairage (30) selon une des revendications précédentes, dans lequel les particules déviant la lumière (2) ont chacune une extension parallèle à l'axe de passage (4) de 1 µm au minimum et de 200 µm au maximum.

5. Dispositif d'éclairage (30) selon une des revendications précédentes, dans lequel la fenêtre de transmission (35) est une pièce extrudée ou une pièce moulée par injection.

6. Dispositif d'éclairage (30) selon une des revendications précédentes, dans lequel, dans un plan de coupe perpendiculaire à l'axe longitudinal (31), sur une plage angulaire qui s'étend entre 30° et 60° par rapport à l'axe 0°, l'intensité lumineuse immédiatement en amont de la fenêtre de transmission (35) est supérieure au moins en moyenne à l'intensité lumineuse immédiatement en aval de la fenêtre de transmission (35).

7. Dispositif d'éclairage (30) selon une des revendications précédentes, dans lequel au moins une des deux surfaces de passage de la lumière (37, 38) de la fenêtre de transmission (35) opposées entre elles dans le sens de l'épaisseur est dotée d'une mésostructure pour permettre le mélange de la lumière par optique géométrique, les éminences (51) formant la mésostructure qui sont disposées sur la même surface de transmission de la lumière (37, 38) étant espacées entre elles d'au moins 100 µm.

8. Dispositif d'éclairage (30) selon une des revendications précédentes, dans lequel les particules déviant la lumière (2) sont magnétiques, chacune avec une direction d'aimantation préférentielle qui est en corrélation avec son axe de déviation (3) et son axe de passage (4).

9. Procédé pour fabriquer un dispositif d'éclairage (30) selon une des revendications précédentes, dans lequel les particules déviant la lumière (2) sont en majorité orientées par rapport à l'axe longitudinal (31) de sorte que leurs axes de déviation (3) s'étendent le long de l'axe longitudinal (31) du dispositif d'éclairage (30).

10. Procédé selon la revendication 9 pour fabriquer un dispositif d'éclairage (30) selon une des revendications 1 à 8, dans lequel le matériau de fenêtre de transmission (1) est prévu sous la forme d'une plaque plane, laquelle plaque est cintrée autour d'un axe et ainsi mise dans la forme courbe de l'enveloppe.

11. Procédé selon la revendication 9 ou 10, dans lequel il est prévu que le matériau de fenêtre de transmission (1) soit sous la forme d'une plaque plane et que des particules dotées de propriétés de déviation de la lumière intrinsèquement isotropes sont intégrées dans la plaque, la plaque s'étendant dans une direction de surface de sorte que les particules se déforment et se transforment ainsi en particules déviant la lumière anisotropes (2).

12. Procédé selon la revendication 9 ou 10 pour fabriquer un dispositif d'éclairage (30) selon la revendication 8, dans lequel il est prévu pour le matériau de fenêtre de transmission (1) un matériau de départ à l'état fluide qui durcit ensuite pour créer la fenêtre de transmission (35), les particules déviant la lumière (2) étant réparties dans le matériau de départ et orientées avant le durcissement du matériau de départ par l'application d'un champ magnétique externe.
